# EUROPÄISCHE PATENTSCHRIFT

(11) **EP 1 370 487 B1**
(45) Veröffentlichungstag und Bekanntmachung des Hinweises auf die Patenterteilung: **13.12.2006**
(21) Anmeldenummer: 02719955.3
(22) Anmeldetag: 28.02.2002
(51) Int. Cl.: C01B 17/45, B01J 20/04

(54) **REINIGUNG VON SULFURYLFLUORID**
PURIFICATION OF SULFURYL FLUORIDE
PURIFICATION DE FLUORURE DE SULFURYLE

(30) Priorität: 09.03.2001 DE 10111302
(43) Veröffentlichungstag der Anmeldung: 17.12.2003
(73) Patentinhaber: Solvay Fluor GmbH, 30173 Hannover (DE)
(72) Erfinder: BELT, Heinz-Joachim, 30938 Burgwedel (DE); SCHWARZE, Thomas, 31275 Ahlten (DE); RIELAND, Matthias, 30559 Hannover (DE); HAUSMANN, Eckhard, 30519 Hannover (DE)
(74) Vertreter: Jacques, Philippe
(86) Internationale Anmeldenummer: PCT/EP2002/002134
(87) Internationale Veröffentlichungsnummer: WO 2002/072472

(56) Entgegenhaltungen:
- DE-A- 4 441 628
- DE-C- 4 343 689
- US-A- 4 392 004
- US-A- 4 950 464
- US-A- 5 214 019
- US-A- 6 143 269
- US-B1- 6 224 840
- DATABASE WPI Section Ch, Week 199426 Derwent Publications Ltd., London, GB; Class E36, AN 1994-215808 XP002203754 & SU 1 809 779 A (PERM APPL CHEM INST), 15. April 1993 (1993-04-15)

## Beschreibung

Die Erfindung bezieht sich auf ein Verfahren zur Erzeugung von gereinigtem Sulfurylfluorid.

Sulfurylfluorid hat dielektrische Eigenschaften und ist als Isoliergas für elektrische Einrichtungen, z.B. für Transformatoren, Kabel oder Schalter, verwendet worden, siehe US-A 3,674,696.

Sulfurylfluorid kann auch als Schädlingsbekämpfungsmittel eingesetzt werden. Herstellungsbedingt können im Rohprodukt noch Fluorwasserstoff, Chlorwasserstoff bzw. Schwefeldioxid und gegebenenfalls auch organische Verunreinigungen wie Dichlorethan enthalten sein. Die Reinigung von Sulfurylfluorid ist mittels Wasserwäsche zwar möglich; dabei wird das Gas angefeuchtet, und es kann zur Hydrolyse mit Fluorwasserstoffbildung kommen.

Aufgabe der vorliegenden Erfindung ist es, ein Verfahren anzugeben, mit welchem Sulfurylfluorid effektiv gereinigt werden kann. Diese Aufgabe wird durch das in den Ansprüchen angegebene Verfahren gelöst.

Das erfindungsgemäße Verfahren zur Erzeugung von gereinigtem Sulfurylfluorid aus verunreinigtem Sulfurylfluorid, welches Fluorwasserstoff, Chlorwasserstoff und/oder Schwefeldioxid sowie gegebenenfalls organische Verunreinigungen enthält, sieht vor, daß man das verunreinigte Sulfurylfluorid mit Alkalimetallfluorid kontaktiert. Bevorzugtes Alkalimetallfluorid ist Kaliumfluorid. Es liegt in fester Phase vor.

Das Kontaktieren des zu reinigenden Rohproduktes mit dem Alkalifluorid wird vorzugsweise im Temperaturbereich von -20 °C bis 150 °C, vorzugsweise 0 °C bis 30 °C durchgeführt.

Es ist möglich, das verunreinigte Sulfurylfluorid unmittelbar nach seiner Herstellung durch Kontaktieren mit Alkalimetallfluorid zu reinigen. Möglich ist auch, es unmittelbar vor seiner Anwendung oder auch während der Anwendung zu reinigen. Beispielsweise kann man Sulfurylfluorid vor der Verwendung als Isoliergas oder Schädlingsbekämpfungsmittel über Alkalimetallfluorid leiten, um Verunreinigungen zu entfernen. Alternativ oder zusätzlich kann man während seiner Anwendung als Isoliergas oder Begasungsmittel einen Teil der Gas- oder Begasungsatmosphäre im Kreislauf führen und dabei jeweils einen Kontakt mit Alkalimetallfluorid vorsehen.

Es ist auch möglich, das Sulfurylfluorid über Alkalimetallfluorid aufzubewahren. Natürlich kann man das Verfahren auch mehrfach durchführen, z. B. unmittelbar nach der Herstellung und unmittelbar vor der Anwendung oder während der Anwendung.

Das Alkalimetallfluorid kann auch mit anderen Adsorptionsmitteln kombiniert eingesetzt werden. Beispielsweise kann man es zusammen mit Aktivkohle oder mit Trockenmitteln einsetzen.

Das beladene Alkalimetallfluorid kann beispielsweise thermisch regeneriert werden.

Vorteil des Verfahrens ist, daß das gereinigte Sulfurylfluorid nicht mit Wasser beladen wird. Wasser ist unerwünscht, weil es zur langsamen Hydrolyse des Sulfurylfluorids, führt. Bei der Anwendung als Schädlingsbekämpfungsmittel ist eine erhöhte Luftfeuchtigkeit unerwünscht, beispielsweise werden Gegenstände oder auch die Wände der Räume selbst (besonders in Kalksteingebäuden) durch das Hydrolyseprodukt Fluorwasserstoff angegriffen; das gilt natürlich auch für elektrische Vorrichtungen. Das erfindungsgemäß gereinigte Sulfurylfluorid weist einen niedrigen Feuchtigkeitsgehalt auf. Ein weiterer Vorteil ist die Regenerierbarkeit des Alkalimetallfluorids. Auch die etwaig mit eingesetzte Aktivkohle oder andere Sorptionsmittel wie Kieselgelperlen (z. B. zur Abtrennung von Wasser) können thermisch regeneriert werden.

Ein weiterer Gegenstand der Erfindung ist ein Sorbens-Kit, welches Alkalimetallfluorid, vorzugsweise Kaliumfluorid, und mindestens ein weiteres festes Sorptionsmittel enthält oder daraus besteht. Als Sorptionsmittel kommen solche in Betracht, welche Wasser, Halogene oder organische Verbindungen zu adsorbieren vermögen. Bevorzugt ist neben Alkalimetallfluorid, Aktivkohle, Kieselgel und/oder Zeolith enthalten. Mit einem solchen Sorbens-Kit kann nicht nur Fluorwasserstoff, Chlorwasserstoff und Schwefeldioxid, sonder auch etwaig enthaltenes Wasser oder organische Bestandteile wie z. B. Dichlorethan abgetrennt werden. Dies ist nicht nur von Vorteil bei der Reinigung des soeben hergestellten Rohproduktes, sondern auch und besonders während der Anwendung. Bei der Anwendung als Isoliergas oder Schädlingsbekämpfungsmittel beispielsweise können auf diese Weise Hydrolyseprodukte des Sulfurylfluorids und auch Wasser entfernt werden.

Im Sorbens-Kit kann das Alkalimetallfluorid und das weitere feste Sorptionsmittel vermischt oder separat voneinander vorliegen, als Schüttung eines Pulvers, eines Granulats, von Pellets, als Extrudat oder in anderer Form.

Das folgende Beispiel soll die Erfindung weiter erläutern, ohne sie in ihrem Umfang einzuschränken.

### Beispiel:

### Reinigung von Sulfurylfluorid mittels Kaliumfluorid/Aktivkohle

Eingesetzt wurde ein Absorbergefäß mit 2 1 Rauminhalt. Es wurde mit einer unteren Schicht Aktivkohle, mit einer darüber angeordneten Kaliumfluoridschicht und einer abschließenden Aktivkohleschicht befüllt. Als Testgas wurden 3 kg Sulfurylfluorid eingesetzt, die mit etwa 107 ppm (v/v) Chlorwasserstoff, 119 ppm (v/v) Fluorwasserstoff und 430 ppm (v/v) Schwefeldioxid angereichert waren. Nach dem Durchleiten lagen die Verunreinigungen unterhalb der Nachweisgrenze.

### Regenerierung des Sorbens-Kits aus Aktivkohle und Kaliumfluorid:

Das Absorbergefäß wurde auf eine Temperatur von oberhalb 200 °C erhitzt, dabei wurde ein Stickstoffstrom durch die Schüttung durchgeleitet. Das das Absorbergefäß verlassende Gas wurde durch einen Wasserwäscher durchgeleitet. Nach dem Regenerieren konnte das Absorbergefäß erneut zur Reinigung von Sulfurylfluorid eingesetzt werden.

## Patentansprüche

1. Verfahren zur Erzeugung von gereinigtem Sulfurylfluorid aus verunreinigtem Sulfurylfluorid, das Fluorwasserstoff und/oder Chlorwasserstoff und/oder Schwefeldioxid sowie gegebenenfalls weitere Verunreinigungen wie Dichlorethan enthält, durch Kontaktieren des verunreinigten Sulfurylfluorids mit Alkalimetallfluorid.

2. Verfahren nach Anspruch 1, **dadurch gekennzeichnet, daß** man Sulfurylfluorid reinigt, welches Fluorwasserstoff, Chlorwasserstoff und Schwefeldioxid enthält.

3. Verfahren nach Anspruch 1, **dadurch gekennzeichnet, daß** man das Kontaktieren mit Alkalifluorid bei einer Temperatur im Bereich von -20 °C bis 150 °C durchführt.

4. Verfahren nach Anspruch 1, **dadurch gekennzeichnet, daß** man das Verfahren unmittelbar nach der Herstellung des Sulfurylfluorids und/oder unmittelbar vor oder während der Anwendung durchführt.

5. Verfahren nach Anspruch 1, **dadurch gekennzeichnet, daß** man das mit Fluorwasserstoff, Chlorwasserstoff bzw, Schwefeldioxid beladene Alkalifluorid regeneriert.

6. Verfahren nach Anspruch 1, **dadurch gekennzeichnet, daß** man Kaliumfluorid als Alkalimetallfluorid einsetzt.

7. Sorbens-Kit, bestehend aus separat voneinander vorliegendem Alkalimetallfluorid und Aktivkohle, Kieselgel und/oder Zeolith.

## Claims

1. Process for producing purified sulfuryl fluoride from contaminated sulfuryl fluoride which contains hydrogen fluoride and/or hydrogen chloride and/or sulphur dioxide and also possibly further contaminants such as dichloroethane, by bringing the contaminated sulfuryl fluoride into contact with alkali metal fluoride.

2. Process according to Claim 1, **characterized in that** sulfuryl fluoride which contains hydrogen fluoride, hydrogen chloride and sulphur dioxide is purified.

3. Process according to Claim 1, **characterized in that** the contact with alkali fluoride is carried out at a temperature in the range from -20°C to 150°C.

4. Process according to Claim 1, **characterized in that** the process is carried out immediately after the preparation of the sulfuryl fluoride and/or immediately before or during its use.

5. Process according to Claim 1, **characterized in that** the alkali fluoride charged with hydrogen fluoride, hydrogen chloride or sulphur dioxide is regenerated.

6. Process according to Claim 1, **characterized in that** potassium chloride is used as the alkali metal fluoride.

7. Sorbent kit comprising alkali metal fluoride and activated charcoal, silica gel and/or zeolite that are separate from one another.

## Revendications

1. Procédé de production de fluorure de sulfuryle purifié à partir de fluorure de sulfuryle contaminé, qui contient du gaz fluorhydrique et/ou du gaz chlorhydrique et/ou du dioxyde de soufre ainsi que le cas échéant d'autres impuretés telles que le dichloroéthane, par mise en contact du fluorure de sulfuryle contaminé avec du fluorure de métal alcalin.

2. Procédé selon la revendication 1, **caractérisé en ce qu'**on purifie du fluorure de sulfuryle qui contient du gaz fluorhydrique, du gaz chlorhydrique et du dioxyde de soufre.

3. Procédé selon la revendication 1, **caractérisé en ce qu'**on réalise la mise en contact avec du fluorure de métal alcalin à une température dans la plage de -20°C à 150°C.

4. Procédé selon la revendication 1, **caractérisé en ce qu'**on réalise le procédé directement après la préparation du fluorure de sulfuryle et/ou directement avant ou pendant l'utilisation.

5. Procédé selon la revendication 1, **caractérisé en ce qu'**on régénère le fluorure de métal alcalin chargé de gaz fluorhydrique, de gaz chlorhydrique ou de dioxyde de soufre.

6. Procédé selon la revendication 1, **caractérisé en ce qu'**on utilise du fluorure de potassium comme fluorure de métal alcalin.

7. Kit de sorbant, constitué par du fluorure de métal alcalin et du charbon actif, du gel silicique et/ou une zéolithe se trouvant sous une forme séparée les uns des autres.
